# EUROPÄISCHE PATENTSCHRIFT

(11) **EP 2 282 106 B1**
(45) Veröffentlichungstag und Bekanntmachung des Hinweises auf die Patenterteilung: **07.09.2011**
(21) Anmeldenummer: 10168655.8
(22) Anmeldetag: 07.07.2010
(51) Int. Cl.: F16P 3/14, B25J 9/16

(54) **Sicherung eines nur über eine sichere Zugangsschleuse zugänglichen Raumbereichs**
Securing an area which can only be accessed through one secure access sluice
Sécurité d'une zone accessible uniquement par une seule porte d'accès

(30) Priorität: 07.08.2009 DE 102009036641
(43) Veröffentlichungstag der Anmeldung: 09.02.2011
(73) Patentinhaber: SICK AG, 79183 Waldkirch (DE)
(72) Erfinder: Haberer, Manfred, 79359 Riegel (DE); Rothenberger, Bernd, 79206 Breisach (DE); MacNamara, Shane, Dr., 79285 Ebringen (DE)
(74) Vertreter: Hehl, Ulrich

(56) Entgegenhaltungen:
- EP-A1- 1 752 702
- EP-A1- 1 911 553
- WO-A1-2008/131704
- DE-A1- 4 016 169
- DE-A1- 4 410 009
- DE-A1-102009 023 707
- US-A- 4 993 049
- US-B1- 6 439 458

## Beschreibung

Die Erfindung betrifft eine Sicherungsvorrichtung und ein Verfahren zur Absicherung eines nur über eine sichere Zugangsschleuse zugänglichen Raumbereichs nach dem Oberbegriff von Anspruch 1 beziehungsweise Anspruch 10.

Im industriellen Umfeld gibt es häufig kooperative Arbeitsplätze, in denen Werker und Roboter oder andere Maschinen abwechselnd Prozess- oder Arbeitsschritte durchführen. Beispiele sind Einlegestationen, Werkerbühnen oder Drehtischanwendungen ohne trennende Schutzeinrichtung. Dabei müssen die Werker während der Arbeitsschritte der Maschine geschützt werden. Die Maschine darf deshalb nur anlaufen, wenn sich kein Werker in dem durch ihren automatischen Arbeitsschritt gefährdeten Bereich befindet.

Es gibt verschiedene herkömmliche Wege, um dies sicherzustellen. Nach einer herkömmlichen Lösung wird der Werker durch eine mechanische oder auch berührungslose Zugangsabsicherung vor dem automatischen Prozessschritt geschützt. Dabei muss der Werker zyklisch durch eine Tür oder sonstige Absicherung aus dem Gefahrenbereich gehen und durch Betätigen einer Wiederanlaufsperre den automatischen Prozessschritt starten. Durch die erforderliche mechanische Absicherung wird die Flexibilität der Anlage erheblich beschränkt.

Nach eine anderen Lösung überwacht ein Sensor ein vordefiniertes Schutzfeld in dem Gefahrenbereich. Das kann ein Laserscanner mit einem horizontalen Schutzfeld, aber auch eine sichere Trittmatte in dem Gefahrenbereich sein. Solange sich in dem Schutzfeld oder auf der Trittmatte unzulässige Objekte befinden, wird ein Anlaufen der Maschine verhindert, indem über Sicherheitsschaltausgänge ein Stoppsignal ausgegeben beziehungsweise eine Freigabe verweigert wird. Nachteilig hieran ist, dass es in manchen Anwendungen nur sehr schwer oder unmöglich ist, Personen in dem gesamten Gefahrenbereich sicher zu erfassen. Ursachen sind Anlagenteile oder Material in dem Gefahrenbereich, die nicht oder nur schwer von Personen unterscheidbar sind. Auch können Werker den Gefahrenbereich hintertreten. Optische Sensoren sind außerdem in störanfälligen Umgebungen nur eingeschränkt verfügbar, etwa bei prozessbedingten Verunreinigungen durch Sägespäne oder Sägestaub in der Holzbearbeitung, bei Schweißfunken, oder bei Regen, Nebel oder Schnee in Außenanwendungen.

Bei allen herkömmlichen Lösungen wird die Gesamtprozesszyklusdauer stark durch die Zeit für die Quittierung oder das Anstarten vor jedem automatischen Prozessschritt durch den Werker bestimmt. Der Werker muss zunächst visuell sicherstellen, dass sich keine Personen innerhalb des Gefahrenbereichs aufhalten. Da es sich oft um sehr monotone Abläufe handelt, lässt die Sorgfalt und Konzentration bei dieser Prüfung mit der Zeit nach. Gerade in unübersichtlichen Anlagen können dann Personen übersehen werden, die sich innerhalb der Anlage befinden. Das führt im besten Fall zu einer Verzögerung, wenn Sensoren die Person erkennen und eine Notabschaltung auslösen, im schlimmsten Fall sogar zu einer Verletzung der Person, wenn die Anlage erneut startet.

Aus der DE 10 2007 018 423 A1 ist eine Zugangskontrolle zu einem Gefahrenbereich mit RFID bekannt. Das System kann außerdem eine Abschaltung auslösen, wenn ein Nutzer unbeabsichtigt in die Nähe des Gefahrenbereichs gerät. Mit RFID allein lässt sich aber eine kompliziertere Anlage nicht sicher überwachen.

Es ist daher Aufgabe der Erfindung, einen automatisierten und zuverlässigen Schutz an kooperativen Arbeitsplätzen zu erreichen.

Diese Aufgabe wird durch eine Sicherungsvorrichtung nach Anspruch 1 und ein Verfahren zur Absicherung eines nur über eine sichere Zugangsschleuse zugänglichen Raumbereichs nach Anspruch 10 gelöst. Dabei geht die Erfindung von dem Grundgedanken aus, das übliche Sicherheitskonzept umzukehren: Statt den eigentlichen Gefahrenbereich, also die Umgebung der Gefahrenquelle daraufhin zu prüfen, ob sich dort Personen oder unzulässige Objekte befinden, wird die Anzahl und Position der Personen an dem kooperativen Arbeitsplatz kontrolliert. Dazu wird die Anlage in einem Raumbereich untergebracht, der nur durch eine Zugangsschleuse zugänglich ist, an welcher der Ein- und Austritt von Personen überwacht wird. Sind beim Anfahren oder während des Betriebs der Anlage alle an der Zugangsschleuse gezählten Personen an einem sicheren Ort erkannt, nämlich der Werkerinsel, so ist ausgeschlossen, dass eine Person gefährdet wird.

Der Begriff "Abschaltsignal" schließt neben einer Abschaltung auch die Verweigerung einer Einschaltung ein. Der Begriff "sicher" ist jeweils im Sinne einschlägiger Sicherheitsnormen zu verstehen. Zur Vereinfachung wird in den Ansprüchen nur jeweils von einem Zugang, einer Werkerinsel und einer Gefahrenquelle gesprochen. Selbstverständlich können ebenso auch mehrere Zugänge, Werkerinseln oder Gefahrenquellen vorhanden sein.

Die Zugangskontrolleinrichtung gewinnt ihre Informationen über die Anzahl der in dem Raumbereich vorhandenen Personen üblicherweise nur differentiell, weiß also nur, um wie viel sich die Anzahl ändert. Die Absolutzahlen werden daraus mit einem Anfangswert gewonnnen, beispielsweise indem bei erster Inbetriebnahme der Sicherungsvorrichtung unabhängig sichergestellt wird, dass der Raumbereich leer ist.

Die Erfindung hat den Vorteil, dass eine übersichtliche Werkerinsel statt der oft schwer einsehbaren, hintertretbaren oder durch Maschinenteile und den automatisierten Prozessschritt unübersichtlichen Umgebung der Gefahrenquelle überwacht wird. Damit wird ein zuverlässiges automatisiertes Anfahren der Anlage auch in stark gestörten Umgebungen ermöglicht. Es gibt keinen Werker, der dafür verantwortlich ist festzustellen, ob sich beim Maschinenstart Personen in der Nähe der Gefahrenquelle aufhalten, und damit keine Konzentrationsfehler oder dergleichen. Da somit die Überprüfung des Raumbereichs durch den Werker entfällt, wird die Zykluszeit des gesamten kooperativen Prozesses optimiert. Der Aufenthalt von unbefugten Personen im Raumbereich wird durch die Zugangsschleuse verhindert.

Die Werkerinsel-Überwachungseinrichtung weist bevorzugt eine erste optoelektronische Sensoreinheit auf. Optoelektronische Sensoren sind in großer Vielfalt bekannt und in der Lage, berührungslos, rasch und zuverlässig die Personen auf der Werkerinsel zu detektieren.

Die erste Sensoreinheit weist vorteilhafterweise eine Kamera, insbesondere eine Stereoskopiekamera oder eine Lichtlaufzeitkamera, oder mindestens einen Laserscanner, insbesondere einen 3D-Laserscanner oder eine Anordnung mehrerer entfernungsmessender zweidimensionaler Laserscanner auf. Diese Sensortypen sind für die Aufgabe, Personen auf der Werkerinsel zu detektieren und zu zählen, besonders geeignet.

Die Werkerinsel-Überwachungseinrichtung weist vorteilhafterweise eine zweite Sensoreinheit auf, um so die Anwesenheit und Anzahl von Personen auf der Werkerinsel mit der ersten Sensoreinheit und der zweiten Sensoreinheit diversitär-redundant zu bestimmen. Diversitär-redundant bedeutet über die doppelte, also redundante Auslegung hinaus, dass die zweite Sensoreinheit sich technisch von der ersten Sensoreinheit unterscheidet. Damit ist die Sicherheit gegenüber möglichen Fehlern erhöht, denn die Wahrscheinlichkeit ist erheblich reduziert, dass ein und derselbe Fehler beide Sensoreinheiten betrifft. Diversitär wäre schon der Einsatz zweier optoelektronischer Sensoren desselben Typs, aber unterschiedlicher Bauart, also beispielsweise zwei nicht baugleiche Laserscanner. Noch stärker diversitär ist die Mischung unterschiedlicher Typen, beispielsweise eine Kamera mit einem Laserscanner. Am robustesten ist die Nutzung gänzlich unterschiedlicher Technologien, beispielsweise ein optoelektronisches und ein mechanisches System.

Die zweite Sensoreinheit weist bevorzugt einen RFID-Leser, eine Trittmatte, eine Zweihandschaltung oder einen Gewichtssensor auf. Im Falle von RFID tragen Personen, die den Raumbereich betreten, ein entsprechendes RFID-Tag. Die zweite Sensoreinheit arbeitet ganz anders als ein optoelektronischer Sensor. Selbst wenn also der Raumbereich stark optisch gestört wird, etwa durch Staub oder sehr helle Lichtquellen, so bleibt die Funktion der zweiten Sensoreinheit erhalten. Es sind kaum realistische Situationen vorstellbar, in denen sowohl ein optoelektronischer als auch ein auf RFID oder mechanischen Einflüssen wie Druck basierender Sensor gleichzeitig versagen.

Die erste Sensoreinheit und/oder die zweite Sensoreinheit ist bevorzugt zugleich als Zugangskontrolleinrichtung ausgebildet. Damit ist kein anderes System für die Überwachung des Zugangs erforderlich. Als Zugangsschleuse ist aber auch alternativ eine Tür, eine Drehtür oder ein Drehgitter denkbar, wobei zusätzlich eine Authentifizierung erfolgen kann, etwa durch Sicherheitsschloss mit Magnetkarte, PIN-Code oder dergleichen. Unbefugte Personen werden damit von vorneherein aus dem Raumbereich ausgeschlossen.

In einer bevorzugten Weiterbildung ist die Werkerinsel-Überwachungseinrichtung dafür ausgebildet, Personen auch außerhalb der Werkerinsel zu erkennen und ihre Bewegung zu verfolgen. Durch eine Personenverfolgung beziehungsweise ein Objekttracking, welches schon mit Durchtritt der Zugangsschleuse einsetzen kann, wird zusätzliche Sicherheit gewonnen, ob sich alle Personen auf der Werkerinsel befinden. Eine lückenlose Personenverfolgung beziehungsweise ein Objekttracking wird wegen anderer, ungefährlicher Objekte im Gefahrenbereich, Bewegungen der Gefahrenquelle oder der Anlage, einem nur begrenztem Überwachungsbereich sowie Störungen häufig nicht möglich sein. Die Personenverfolgung setzt deshalb bevorzugt immer wieder neu an, sobald irgendwo im Raumbereich eine Person erkannt ist. Damit werden für die Funktion der Werkerinsel-Überwachungseinrichtung günstige Anfangsbedingungen geschaffen, und deren Erkennung kann stets plausibilisiert werden.

Die Zugangskontrolleinrichtung ist bevorzugt dafür ausgebildet, Personeninformationen über Eigenschaften der in den Gefahrenbereich eintretenden Personen zu gewinnen, insbesondere über Gewicht, Farbe, Kontur oder Größe der Person, wobei der Werkerinsel-Überwachungseinrichtung die Personeninformation für die Erkennung der Anwesenheit und Anzahl von Personen auf der Werkerinsel zur Verfügung steht. Das erleichtert die Erkennung von Personen und erhöht deren Sicherheit. Hat beispielsweise ausschließlich eine dunkel gekleidete, große und schwere Person den Raumbereich betreten, und wird später zum Maschinenstart eine hell gekleidete, kleine und leichte Person auf der Werkerinsel erkannt, so liegt vermutlich ein Erkennungsfehler vor.

In bevorzugter Weiterbildung unterstützt die Werkerinsel die optoelektronische Erkennung von Personen und weist insbesondere einen hellen, dunklen oder gelben Hintergrund oder ein Kontrastmuster auf oder ist frei von Gegenständen, Metall und/oder spiegelnden Flächen. Damit kann die Erkennungssicherheit der Sensoren ganz erheblich gesteigert werden, und die Verfügbarkeit der Anlage steigt. Dies ist ein großer Vorteil der Erfindung, denn die herkömmlich überwachte Umgebung der Gefahrenquelle lässt sich kaum beeinflussen und bietet oft nur schwierige Verhältnisse für eine automatisierte Überwachung an, da sie durch die Anlage bestimmt wird. Die Werkerinsel dagegen lässt sich unabhängig von der Anlage optimal für den Sensor präparieren und bietet dann einen vorhersehbaren und einfachen Hintergrund für die Detektion von Personen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Draufsicht auf einen nur kontrolliert zugänglichen Raumbereich, der durch eine Ausführungsform der erfindungsgemäßen Si- cherungsvorrichtung abgesichert wird;
- Fig. 2: eine schematische Darstellung einer Stereokamera als Beispiel eines op- toelektronischen Sensors, der in einer erfindungsgemäßen Sicherungsvor- richtung einsetzbar ist;
- Fig. 3: eine schematische Darstellung eines Laserscanners als weiteres Beispiel eines optoelektronischen Sensors, der in einer erfindungsgemäßen Siche- rungsvorrichtung einsetzbar ist;
- Fig. 4: eine schematische Blockdarstellung der Steuerung einer erfindungsgemä- ßen Sicherungsvorrichtung;
- Fig. 5: ein Ablaufdiagramm der Zugangskontrolle an der Zugangsschleuse einer erfindungsgemäßen Sicherungsvorrichtung; und
- Fig. 6: ein Ablaufdiagramm beim Maschinenstart in einer Anlage, die durch eine erfindungsgemäße Sicherungsvorrichtung abgesichert ist.

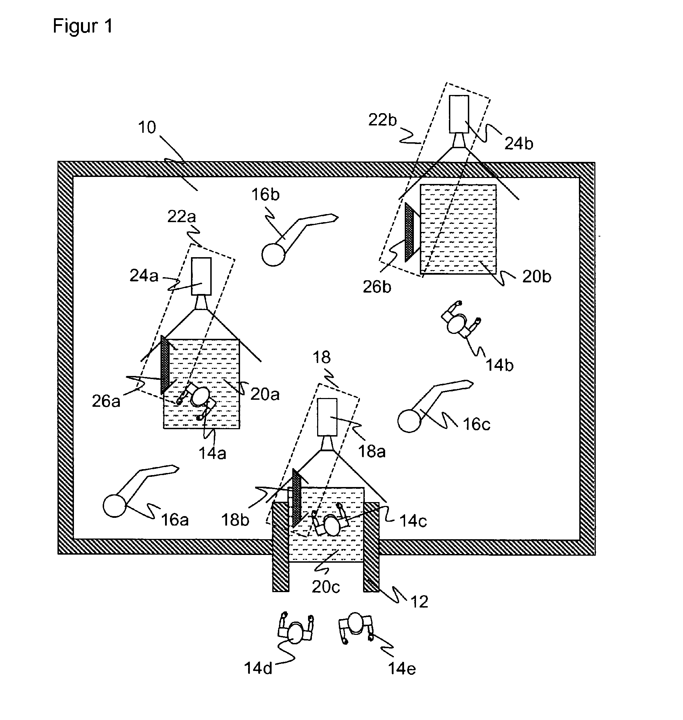

Figur 1 zeigt in einer schematischen Draufsicht einen Raumbereich 10, der nur kontrolliert durch einen Zugang 12 betreten und verlassen werden kann. Der Raumbereich 10 ist also wie dargestellt durch eine Wand, alternativ aber auch durch mechanische Absperrungen oder durch Sensoren wie Lichtgitter abgetrennt.

In dem Raumbereich 10 befindet sich ein kooperativer Arbeitsplatz mit einer Anlage, an dem Personen 14a-e und Maschinen 16a-c abwechselnd Prozessschritte ausführen. Die Anlage selbst sowie deren Verarbeitungsprodukte sind zur Vereinfachung nicht dargestellt. Arbeitsbewegungen der Maschinen 16a-c, etwa von Roboterarmen, bilden potentiell eine Gefahr für die Personen 14a-e, so dass während der Aktivität der Maschinen 16a-c die Personen 14a-e sich nicht in deren Arbeitsradius aufhalten dürfen. An dem Zugang 12 befindet sich eine Zugangskontrolleinrichtung 18, welche den Zugang 12 zu einer sicheren Zugangsschleuse macht. Der Raumbereich 10 ist so gestaltet, dass Personen 14a-e nur durch diese sichere Zugangsschleuse ein- oder austreten können. Die Zugangskontrolleinrichtung 18 erkennt und zählt Personen 14a-e, welche den Raumbereich 10 betreten oder verlassen. Somit ist die Anzahl in dem Raumbereich 10 befindlicher Personen 14a-c stets bekannt, sofern bei Aktivierung der Zugangskontrolleinrichtung 18 ein korrekter Anfangswert vorgegeben wurde.

In Figur 1 befinden sich zwei Personen 14a-b in dem Raumbereich 10, die bei ihrem Eintritt gezählt wurden. Eine weitere Person 14c hat den Raumbereich 10 gerade betreten. Die Personen 14d-e wollen den Raumbereich 10 betreten beziehungsweise haben ihn gerade verlassen, werden aber beide nicht gezählt, da sie sich derzeit außerhalb des Raumbereichs 10 aufhalten.

Innerhalb des Raumbereichs 10 sind Werkerinseln 20a-c eingerichtet, auf denen während der Bewegungen der Maschinen 16a-c keine Gefährdung für die Personen 14a-e besteht. Überwachungssensoren 22a-b erfassen und zählen Personen 14a-e auf den Werkerinseln 20a-c. Es ist abweichend von der Darstellung auch denkbar, dass ein Überwachungssensor 22a-b mehrere Werkerinseln 20a-c überwacht oder umgekehrt mehrere Überwachungssensoren 22a-b an einer Werkerinsel 20a-c montiert sind. Die Maschinen 16a-c können nur in Betrieb gehen, wenn alle in dem Raumbereich 10 befindlichen Personen 14a-c auf Werkerinseln 20a-c erfasst sind, und sie werden sofort durch ein sicheres Abschaltsignal angehalten, wenn eine Person 14b eine Werkerinsel 20 verlässt.

In dem Beispiel der Figur 1 befindet sich die Person 14a auf einer Werkerinsel 20a. Eine weitere Person 14b ist möglicherweise auf dem Weg zu der Werkerinsel 20b, wird dort aber noch nicht erfasst. Deshalb bleiben die Maschinen 16a-c inaktiv und können nicht in Betrieb genommen werden. Die Person 14c hält sich noch in dem Zugang 12 auf. Dieser Zugang 12 ist zugleich als Werkerinsel 20c ausgebildet. Das ist häufig sinnvoll, weil der Zugang 12 ohnehin überwacht wird und meist nicht gefährdet ist, der Zugang 12 kann aber ebenso auch keine Werkerinsel 20c sein.

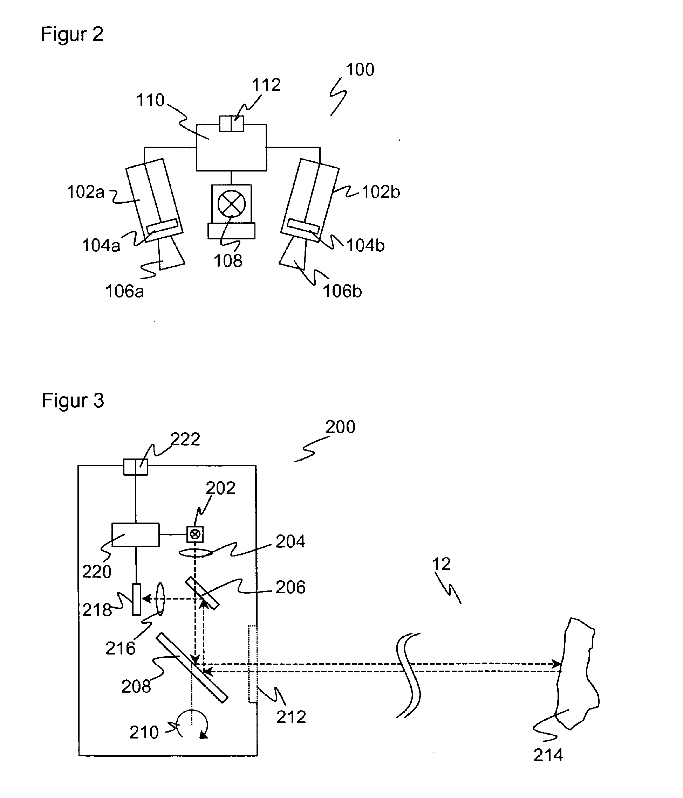

Die Überwachungssensoren 22a-b bestehen jeweils aus zwei Sensoreinheiten, nämlich einem optoelektronischen Sensor 24a-b und einem RFID-Leser 26a-b. Beispiele für die Ausführung der optoelektronischen Sensoren 24a-b werden weiter unten im Zusammenhang mit den Figuren 2 und 3 näher erläutert. Die Werkerinseln 20a-c sind mit einem definierten Hintergrund versehen, um die Detektion der optoelektronischen Sensoren 24a-b zu unterstützen. Je nach Sensortyp sind die Werkerinseln 20a-c mit einem hellen Hintergrund oder mit einem Kontrastmuster versehen, frei von Objekten oder frei von metallischen und reflektierenden Flächen.

Die RFID-Leser 26a-b erkennen RFID-Tags, mit denen die Personen 14a-e ausgerüstet sind, etwa in ihrer Arbeitskleidung oder im Schuhabsatz integriert. Durch entsprechende Anordnungen und Abschirmungen ist sichergestellt, dass die RFID-Leser 26a-b nur RFID-Tags der ihnen zugeordneten Werkerinseln 20a-c lesen. Alternativ können die RFID-Leser 26a-b die gelesenen RFID-Tags auch lokalisieren. Anstelle von RFID-Lesern 26a-b sind auch Trittmatten, Zweihandschaltungen, Gewichtssensoren und anderes einsetzbar. Die Sicherheit wird erhöht, wenn die hier verwendete Technologie möglichst unterschiedlich zu optoelektronischer Detektion ist.

Obwohl die Zugangskontrolleinrichtung 18 prinzipiell beliebig ausgeführt sein kann, etwa als mechanische Drehtür, ist vorteilhaft, wenn sie ebenfalls einen optoelektronischen Sensor 18a und einen RFID-Leser 18b aufweist. Dann muss keine zusätzliche Technologie integriert werden, und bereits an der Zugangsschleuse 12 können gleichartige Daten erhoben werden wie später an den Werkerinseln 20a-c, womit dort die Detektion vereinfacht oder gegengeprüft wird. Idealerweise ist sogar insgesamt nur ein Sensor vorhanden, welcher die Funktionalität der Zugangskontrolleinrichtung 18 und der Überwachungssensoren 20a-b zugleich wahrnimmt.

Als optoelektronischer Sensor 24a-b sind eine Reihe von Sensortypen geeignet. Figur 2 zeigt schematisch eine 3D-Kamera 100 nach dem Stereoskopieprinzip. Zwei Kameramodule 102a, 102b sind in einem bekannten festen Abstand zueinander montiert und nehmen jeweils Bilder des Raumbereichs 10 oder eines Teilbereichs davon auf. In jedem Kameramodul 102a-b ist ein Bildsensor 104a-b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 104a-b ist jeweils ein Objektiv mit einer abbildenden Optik zugeordnet, welche als Linsen 106a-b dargestellt sind und in der Praxis als jedes bekannte Abbildungsobjektiv realisiert sein können.

In der Mitte zwischen den beiden Bildsensoren 104a-b ist eine Beleuchtungseinheit 108 dargestellt, wobei diese räumliche Anordnung nur als Beispiel zu verstehen ist und die Beleuchtungseinheit ebenso asymmetrisch oder sogar außerhalb der 3D-Kamera 108 angeordnet sein kann. Die Beleuchtungseinheit 108 erzeugt auf der überwachten Werkerinsel 20a-c ein strukturiertes Beleuchtungsmuster, das mit dem Hintergrund der Werkerinsel 20a-c einen hohen Kontrast bildet.

Mit den beiden Bildsensoren 104a-b und der Beleuchtungseinheit 108 ist eine Steuerung 110 verbunden, welche Bilddaten der Bildsensoren 104a-b empfängt. Aus diesen aus leicht unterschiedlichen Perspektiven gewonnenen Bilddaten berechnet die Steuerung 110 mit Hilfe einer stereoskopischen Disparitätsschätzung dreidimensionale Bilddaten. Das Beleuchtungsmuster sorgt dabei für einen guten Kontrast und, besonders wenn es selbstunähnlich ist, eine eindeutig zuordenbare Struktur jedes Bildelements. In den dreidimensionalen Bilddaten werden Personen 14a-e erkannt und können so in Position und Anzahl bestimmt werden. Diese Daten sind an einem Anschluss 112 abrufbar.

Um für sicherheitstechnische Anwendungen geeignet zu sein, ist die 3D-Kamera 100 fehlersicher ausgelegt. Dies bedeutet unter anderem, dass sich die 3D-Kamera 100 selber, auch in Zyklen unterhalb der geforderten Ansprechzeit, testen kann, insbesondere auch Defekte der Beleuchtungseinheit 108 erkennt und somit sicherstellt, dass das Beleuchtungsmuster in einer erwarteten Mindestintensität verfügbar ist, und dass der Anschluss 112 sicher, beispielsweise zweikanalig ausgelegt ist. Ebenso ist auch die Steuerung 110 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 sowie in der DIN EN ISO 13849 und EN 61508 normiert. Eine entsprechende Norm für Sicherheitskameras befindet sich in der Vorbereitung.

Anstelle einer stereoskopischen 3D-Kamera 100 ist auch der Einsatz einer zweidimensionalen Kamera mit entsprechender Bildverarbeitung oder einer Lichtlaufzeitkamera denkbar. Lichtlaufzeitkameras werten Laufzeiten ihres Sendelichts in jedem Pixel ihres matrixförmigen Bildsensors aus, beispielsweise mittels Photonmischdetektion, und erzeugen ebenfalls dreidimensionale Bilder.

Figur 3 zeigt in einer schematischen Querschnittdarstellung einen Laserscanner 200 als weiteren möglichen Sensortyp für den optoelektronischen Sensor 24a-b. Ein Lichtsender 202 sendet kurze Lichtpulse aus. Das Sendelichtbündel wird von einer Sendeoptik 204 geformt und tritt durch einen Teilerspiegel 206 hindurch, bevor es auf einen drehbaren Scanspiegel 208 fällt. Der Scanspiegel 208 ist beispielsweise als Drehspiegel oder als Polygonspiegelrad ausgebildet und sorgt durch seine Drehbewegung gemäß dem Pfeil 210 dafür, dass das Sendelichtbündel periodisch den Raumbereich 10 abtastet. Dabei wird mit einem nur in einer Achse beweglichen Scanspiegel 18 eine Ebene überwacht. Mit einem zusätzlichen Bewegungsmechanismus für den Scanspiegel 208 ist auch ein dreidimensionaler Raumbereich abtastbar.

Das Sendelicht fällt nach Durchtritt durch eine Frontscheibe 212 auf ein Objekt 214 und wird dort zumindest teilweise zu dem Laserscanner 200 remittiert oder reflektiert. Nach zweifacher Umlenkung an dem Scanspiegel 208 und dem Teilerspiegel 206 wird das Empfangslichtbündel nach Strahlformung in einer Empfangsoptik 216 in einem Lichtempfangselement 218 registriert, beispielsweise einer Photodiode.

Eine Steuereinheit 220 ermittelt die Laufzeit der Lichtpulse vom Zeitpunkt der Aussendung an dem Lichtsender 202 bis zur Detektion in dem Lichtempfangselement 218 und errechnet daraus über die Lichtgeschwindigkeit die Entfernung des Objekts 214. Mit jeder periodischen Drehbewegung des Scanspiegels 208 entsteht so ein Bild mit einem Entfernungsprofil der Objekte 214 in dem Raumbereich 10. Das Bild hat in Winkelrichtung eine Auflösung, die von der Pulsfrequenz des Sendepulses an dem Lichtsender 202 und der Drehgeschwindigkeit des Scanspiegels 208 abhängt. Darin können Personen anhand ihrer Profile erkannt und ihre Position und Anzahl bestimmt werden. Die Ausgangdaten des Laserscanners 220 stehen an einem Ausgang 222 für die weitere Verarbeitung zur Verfügung.

Anstelle des beschriebenen pulsbasierten Laserscanners 200 ist auch ein phasenbasierter Laserscanner einsetzbar. Auch können mehrere Laserscanner 200 kombiniert werden, um eine Werkerinsel 20a-c zu überwachen. Hinsichtlich der Sicherheit des Laserscanners gelten die oben genannten Eigenschaften und Normen analog.

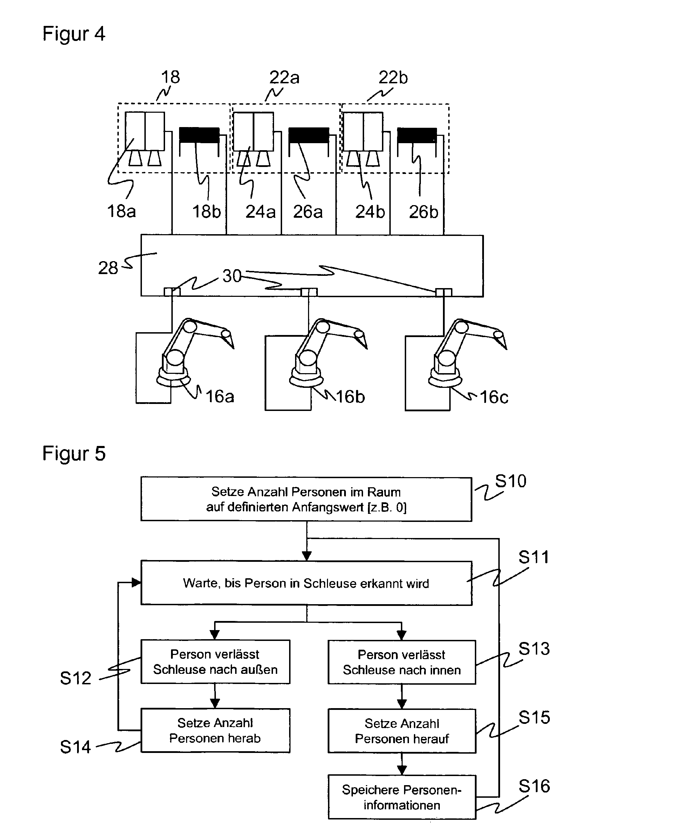

Die einzelnen Sensoren, also die Zugangskontrolleinrichtung 18 und die Überwachungssensoren 22a-b, sowie die Maschinen 16a-c sind über eine Steuerung 28 miteinander verschaltet, wie schematisch in Figur 4 gezeigt. In der Steuerung werden die Informationen über die in dem Raumbereich 10 befindlichen Personen 14a-c, über Personen 14a auf Werkerinseln 20a-c und weitere unterstützende Informationen gesammelt. Je nach Ausführungsform erhält die Steuerung 28 Rohdaten oder bereits fertig verarbeitete Positionen, Anzahlen beziehungsweise Personeninformationen. Die Steuerung 28 gibt nach entsprechender Verrechnung ein Abschaltsignal über sichere Ausgänge 30 (OSSD, Output Signal Switching Device) an die Maschinen 16a-c aus oder gibt diese für einen automatisierten Prozessschritt frei.

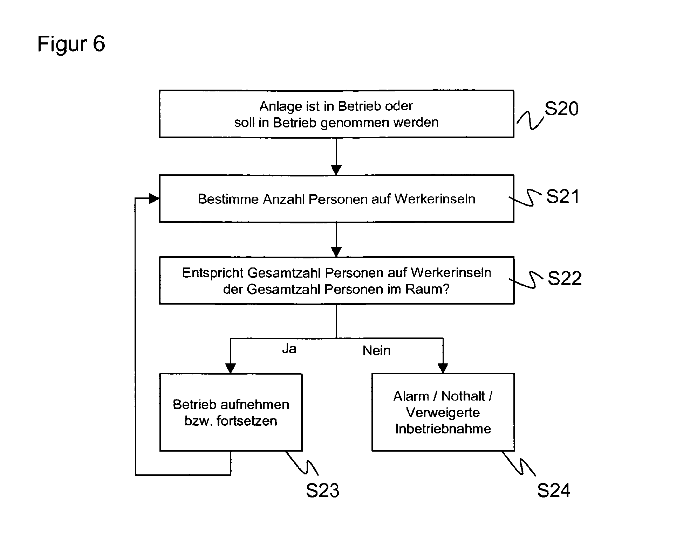

Abschließend wird der Ablauf der Absicherung anhand der Figuren 5 und 6 beschrieben. Figur 5 erläutert die sichere Bestimmung der Anzahl der Personen 14a-c in dem Raumbereich 10. In einem ersten Schritt S10 wird die anfängliche Anzahl der Personen 14a-c in dem Raumbereich 10 manuell eingestellt. Dabei versichert sich das Bedienpersonal, dass der Raumbereich 10 frei ist, oder gibt die Anzahl der visuell in dem Raumbereich 10 gezählten Personen vor.

Mit Aufnahme des eigentlichen Betriebs der Zugangskontrolleinrichtung 18 in einem zweiten Schritt S11 wird der Zugang 12 so lange überwacht, bis dort eine Person 14c erfasst ist. Zu jeder von dem Sensor 18a optisch erfassten Person 14c werden Eigenschaften gespeichert, beispielsweise Farben, Größen oder Konturen. Ein zweiter Sensor 18b, beispielsweise ein RFID-Leser 18b oder eine Trittmatte, muss die Person 14c ebenfalls erkennen. Werden bei einer Ausführungsform mit RFID-Leser 18b Objekte in der Zugangsschleuse 12 optisch erfasst, ohne dass ein Transponder zugeordnet werden kann, so führt dies zu einem Stop oder Verriegelungszustand der Anlage, weil die Person 14c möglicherweise nicht befugt ist, den Raumbereich 10 zu betreten. Eine Person 14c ohne Transponder könnte dann auch später innerhalb des Raumbereichs 10 von den RFID-Lesern 26a-b nicht erkannt oder verfolgt (getrackt) werden. Auch wenn die erkannte Person 14c die Zugangsschleuse 12 nach außen verlässt, muss der Transponder erkannt werden, weil nur so die Personenanzahl sicher herabgezählt werden darf.

Die erfasste Person 14c verlässt die Zugangsschleuse 12 entweder in einem Schritt S12 nach außen oder in einem Schritt S13 in Richtung des Raumbereichs 10. Entsprechend wird in Schritten S14 beziehungsweise S15 die Personenzahl in dem Raumbereich 10 herab- oder heraufgesetzt. Wenn die Person 14c den Raumbereich betritt, werden außerdem in einem Schritt S16 Personeninformationen gespeichert, also beispielsweise Farbe, Größe, Kontur oder Tag-ID.

Mit dem Ablauf gemäß Figur 5 ist jederzeit auf sichere Weise die Anzahl der Personen 14a-c in dem Raumbereich 10 bekannt. Die Zugangsüberwachung ist ständig aktiv, auch parallel zu dem nun beschriebenen Ablauf gemäß Figur 6 bei der Inbetriebnahme der Anlage.

In einem Schritt S20 sind zwei Situationen zusammengefasst. Entweder ist die Anlage bereits im Betrieb und führt einen automatischen Prozessschritt aus, oder sie soll gestartet werden, um einen automatischen Prozessschritt zu beginnen. In einem Schritt S21 wird dann mit Hilfe der Überwachungssensoren 22a-b geprüft, wie viele der Personen 14a-c sich auf Werkerinseln 20a-c befinden. Entspricht diese Anzahl in einem Schritt S22 der bekannten Gesamtzahl von Personen 14a-c in dem Raumbereich 10, so wird der Betrieb der Anlage in einem Schritt S23 aufgenommen oder fortgesetzt, und die Überprüfung wird zyklisch bei Schritt S21 fortgesetzt, um zu gewährleisten, dass sich weiterhin alle Personen 14a-c auf Werkerinseln 20a-c befinden. Sobald und solange also alle im Raumbereich 10 erfassten Personen 14a-c in den Werkerinseln 20a-c erkannt sind, kann der gefährliche Prozess ohne auslösendes Startsignal eines Werkers gestartet und anschließend sicher fortgesetzt werden. Dann haben alle Personen 14a-e eine ungefährliche Position eingenommen. Sobald dagegen die Gesamtzahl der Personen 14a-e auf Werkerinseln 20a-c nicht der Gesamtzahl der Personen 14a-c in dem Raumbereich 10 entspricht, wird in einem Schritt S24 ein Alarm oder ein Nothalt ausgelöst oder die Inbetriebnahme verweigert.

Bei der Erfassung und Zählung der Personen 14a-e auf Werkerinseln 20a-c in dem Schritt S21 können zur Unterstützung die Personeninformationen verwendet werden, die in Schritt S16 gespeichert wurden. Außerdem können die Sensoren 22a-b ständig versuchen, die Personen 14a-e zu verfolgen, auch wenn sie sich nicht auf Werkerinseln 20a-c befinden. Das wird manchmal nicht gelingen, wenn die Personen 14a-e aus dem Erfassungsbereich treten oder in unübersichtlichen Anlagenteilen nicht erfassbar sind. Dann wird die Personenverfolgung fortgesetzt, sobald eine nicht zugeordnete Person wieder erfasst werden kann. Verwechslungen hierbei sind nicht relevant, da in erster Linie die Anzahl der Personen 14a-e auf Werkerinseln 20a-c über Betrieb oder Stopp beziehungsweise Verriegelung entscheidet. Auch Lücken in der Personenverfolgung beeinträchtigen die Sicherheit nicht, da die Personenverfolgung nur die Erfassung auf den Werkerinseln 20a-c erleichtert oder plausibilisiert.

### Beschreibung der Figur 5:

S10: Setze Anzahl Personen im Raum auf definierten Anfangswert [z.B. 0].
S11: Warte, bis Person in Schleuse erkannt wird.
S12: Person verlässt Schleuse nach außen.
S13: Person verlässt Schleuse nach innen.
S14: Setze Anzahl Personen herab.
S15: Setze Anzahl Personen herauf.
S16: Speichere Personeninformationen.

### Beschreibung der Figur 6:

S20: Anlage ist in Betrieb oder soll in Betrieb genommen werden.
S21: Bestimme Anzahl Personen auf Werkerinseln.
S22: Entspricht Gesamtzahl Personen auf Werkerinselnder Gesamtzahl Personen im Raum?
S23: Betrieb aufnehmen bzw. fortsetzen.
S24: Alarm / Nothalt /Verweigerte Inbetriebnahme.

## Patentansprüche

1. Sicherungsvorrichtung zur Absicherung eines nur über eine sichere Zugangsschleuse (12) zugänglichen Raumbereichs (10) mit einer Gefahrenquelle (16a-c), wobei die Sicherungsvorrichtung eine Zugangskontrolleinrichtung (18) der Zugangsschleuse (12) aufweist, mit der Informationen über die Anzahl in dem Raumbereich (10) befindlicher Personen (14a-e) gewinnbar sind,
**dadurch gekennzeichnet,**
**dass** in dem Raumbereich (10) eine Werkerinsel (20a-c) vorgesehen ist, in welcher die Gefahrenquelle (16a-c) Personen (14a-e) nicht gefährdet, und dass die Sicherungsvorrichtung eine Werkerinsel-Überwachungseinrichtung (22a-b), die dafür ausgebildet ist, die Anwesenheit und Anzahl von Personen (14a-e) auf der Werkerinsel (20a-c) zu bestimmen, sowie einen sicheren Abschaltausgang (30) aufweist, über den ein Abschaltsignal an die Gefahrenquelle (16a-c) ausgebbar ist, wenn nicht sämtliche in dem Raumbereich (10) befindlichen Personen (14a-e) auf einer Werkerinsel (20a-c) erkannt sind.

2. Sicherungsvorrichtung nach Anspruch 1,
wobei die Werkerinsel-Überwachungseinrichtung (22a-b) eine erste optoelektronische Sensoreinheit (24a-b) aufweist.

3. Sicherungsvorrichtung nach Anspruch 2,
wobei die erste Sensoreinheit (24a-b) eine Kamera, insbesondere eine Stereoskopiekamera (100) oder eine Lichtlaufzeitkamera, oder mindestens einen Laserscanner (200), insbesondere einen 3D-Laserscanner oder eine Anordnung mehrerer entfernungsmessender zweidimensionaler Laserscanner aufweist.

4. Sicherungsvorrichtung nach Anspruch 2 oder 3,
wobei die Werkerinsel-Überwachungseinrichtung (22a-b) eine zweite Sensoreinheit (26a-b) aufweist, um so die Anwesenheit und Anzahl von Personen (14a-e) auf der Werkerinsel (20a-c) mit der ersten Sensoreinheit (24a-b) und der zweiten Sensoreinheit (26a-b) diversitär-redundant zu bestimmen.

5. Sicherungsvorrichtung nach Anspruch 4,
wobei die zweite Sensoreinheit (26a-b) einen RFID-Leser, eine Trittmatte, eine Zweihandschaltung oder einen Gewichtssensor aufweist.

6. Sicherungsvorrichtung nach einem der Ansprüche 2 bis 5,
wobei die erste Sensoreinheit (24a-b) und/oder die zweite Sensoreinheit (26a-b) zugleich als Zugangskontrolleinrichtung (18a-b) ausgebildet ist.

7. Sicherungsvorrichtung nach einem der vorhergehenden Ansprüche,
wobei die Werkerinsel-Überwachungseinrichtung (22a-b) dafür ausgebildet ist, Personen (14a-e) auch außerhalb der Werkerinsel (20a-c) zu erkennen und ihre Bewegung zu verfolgen.

8. Sicherungsvorrichtung nach einem der vorhergehenden Ansprüche,
wobei die Zugangskontrolleinrichtung (18) dafür ausgebildet ist, Personeninformationen über Eigenschaften der in den Raumbereich (10) eintretenden Personen (14a-e) zu gewinnen, insbesondere über Gewicht, Farbe, Kontur oder Größe der Person (14a-e), und wobei der Werkerinsel-Überwachungseinrichtung (22a-b) die Personeninformation für die Erkennung der Anwesenheit und Anzahl von Personen (14a-e) auf der Werkerinsel (20a-c) zur Verfügung steht.

9. Sicherungsvorrichtung nach einem der vorhergehenden Ansprüche,
wobei die Werkerinsel (20a-c) die optoelektronische Erkennung von Personen (14a-e) unterstützt und insbesondere einen hellen, dunklen oder gelben Hintergrund oder ein Kontrastmuster aufweist oder frei von Gegenständen, Metall und/oder spiegelnden Flächen ist.

10. Verfahren zur Absicherung eines nur über eine sichere Zugangsschleuse (12) zugänglichen Raumbereichs (10) mit einer Gefahrenquelle (16a-c), wobei in der Zugangsschleuse (12) in den Raumbereich (10) eintretende und aus dem Raumbereich (10) austretende Personen (14a-e) sicher registriert und somit die Anzahl in dem Raumbereich (10) befindlicher Personen (14a-e) sicher bestimmt wird,
**dadurch gekennzeichnet,**
**dass** die Anwesenheit und Anzahl von Personen (14a-e) in einer Werkerinsel (20a-c) innerhalb des Raumbereichs (10) festgestellt wird, in welcher die Gefahrenquelle (16a-c) Personen (14a-e) nicht gefährden kann, und dass durch Ausgabe eines sicheren Abschaltsignals die Gefahrenquelle (16a-c) abgesichert oder die Inbetriebnahme der Gefahrenquelle (16a-c) verhindert wird, wenn nicht sämtliche in dem Raumbereich (10) befindlichen Personen (14a-e) auf einer Werkerinsel (20a-c) erkannt sind.

11. Verfahren nach Anspruch 10,
wobei die Anwesenheit und Anzahl von Personen (14a-e) auf der Werkerinsel (20a-c) mit einer ersten optoelektronischen Sensoreinheit (24a-b) bestimmt wird.

12. Verfahren nach Anspruch 11,
wobei die Anwesenheit und Anzahl von Personen (14a-e) auf der Werkerinsel (20a-c) mit der ersten optoelektronischen Sensoreinheit (24a-b) und einer zweiten Sensoreinheit (26a-b) diversitär-redundant überwacht wird.

13. Verfahren nach Anspruch 11 oder 12,
wobei auch die Zugangsschleuse (12) von der ersten Sensoreinheit (24a-b) und/oder der zweiten Sensoreinheit (26a-b) überwacht wird, um die in den Raumbereich (10) eintretenden oder aus dem Raumbereich (10) austretenden Personen (14a-e) zu registrieren.

14. Verfahren nach einem der Ansprüche 10 bis 13,
wobei bei der Zugangsschleuse (18) Personeninformationen über Eigenschaften der in dem Raumbereich (10) befindlichen Personen (14a-e) gewonnen werden, insbesondere über Gewicht, Farbe, Kontur oder Größe der Person (14a-e), und wobei die Personeninformationen für die Erkennung der Anwesenheit und Anzahl von Personen (14a-e) auf der Werkerinsel (20a-c) zur Verfügung stehen.

15. Verfahren nach einem der Ansprüche 10 bis 14,
wobei die Werkerinsel (20a-c) für eine bessere optoelektronische Erkennung von Personen (14a-e) ausgerüstet wird, insbesondere durch einen hellen, dunklen oder gelben Hintergrund oder ein Kontrastmuster oder indem die Werkerinsel (20a-c) frei von Gegenständen, Metall und/oder spiegelnden Flächen gehalten wird.

## Claims

1. A securing apparatus for securing a spatial zone (10) having a danger source (16a-c) and accessible only via a secure access lock (12), wherein the securing apparatus has an access monitoring device (18) of the access lock (12) by which information on the number of persons (14a-e) located in the spatial zone (10) can be acquired,
**characterised in that**
a worker island (20a-c) is provided in the spatial zone (10), in which worker island the danger source (16a-c) does not endanger persons (14a-e); and **in that** the securing apparatus has a worker island monitoring device (22a-b) which is designed to determine the presence and number of persons (14a-e) on the worker island (20a-c) and also has a secure deactivation output (30) via which a deactivation signal can be output to the danger source (16a-c) if not all persons (14a-e) located in the spatial zone (10) are recognised on a worker island (20a-c).

2. A securing apparatus in accordance with claim 1,
wherein the worker island monitoring device (22a-b) has a first optoelectronic sensor unit (24a-b).

3. A securing apparatus in accordance with claim 2,
wherein the first sensor unit (24a-b) has a camera, in particular a stereoscopic camera (100) or a time-of-flight camera, or at least one laser scanner (200), in particular a 3D laser scanner or an arrangement of a plurality of distance measuring two-dimensional laser scaners.

4. A securing apparatus in accordance with claim 2 or claim 3,
wherein the worker island monitoring device (22a-b) has a second sensor unit (26a-b) in order thus to determine the presence and number of persons (14a-e) on the worker island (20a-c) using the first sensor unit (24a-b) and the second sensor element (25a-b) in a dissimilar redundant manner.

5. A securing apparatus in accordance with claim 4,
wherein the second sensor unit (26a-b) has an RFID reader, a pressure mat, a dual belt switch or a weight sensor.

6. A securing apparatus in accordance with any one of the claims 2 to 5,
wherein the first sensor unit (24a-b) and/or the second sensor unit (26a-b) is/are simultaneously designed as an access monitoring device (18a-b).

7. A securing apparatus in accordance with any one of the preceding claims,
wherein the worker island monitoring device (22a-b) is deigned also to recognise persons (14a-e) outside the worker island (20a-c) and to track their movement.

8. A securing apparatus in accordance with any one of the preceding claims,
wherein the access monitoring device (18) is designed to acquire personal information on properties of the persons (14a-e) entering the spatial zone (10), in particular on weight, colour, contour or size of the person (14a-e); and wherein the personal information for the recognition of the presence and number of persons (14a-e) on the worker island (20a-c) is provided to the worker island monitoring device (22a-b).

9. A securing apparatus in accordance with any one of the preceding claims,
wherein the worker island (20a-c) supports the optoelectronic recognition of persons (14a-e) and in particular has a bright, dark or yellow background or a contrast pattern or is free of objects, metal and/or reflective surfaces.

10. A method of securing a spatial zone (10) having a danger source (16a-c) and accessible only via a secure access lock (12), wherein persons entering the spatial zone (10) and leaving the spatial zone (10) are reliably registered in the access lock (12) and the number of persons (14a-e) located in the spatial zone (10) is reliably determined,
**characterised in that**
the presence and number of persons (14a-e) in a worker island (20a-e) inside the spatial zone (10) is determined, in which worker island the danger source (16a-c) cannot endanger persons (14a-e); and **in that** the danger source (16a-c) is secured by outputting a secure deactivation signal or the putting into operation of the danger source (16a-c) is prevented if not all persons (14a-e) located in the spatial zone (10) are recognised on a worker island (20a-c).

11. A method in accordance with claim 10,
wherein the presence and number of persons (14a-e) on the worker island (20a-c) is determined using a first optoelectronic sensor unit (24a-b).

12. A method in accordance with claim 11,
wherein the presence and number of persons (14a-e) on the worker island (20a-c) is monitored using the first optoelectronic sensor unit (24a-b) and a second sensor unit (26a-b) in a dissimilar redundant manner.

13. A method in accordance with claim 11 or claim 12,
wherein the access lock (12) is also monitored by the first sensor unit (24a-b) and/ (or the second sensor unit (26a-b) to register the persons (14a-e) entering the spatial zone (10) or leaving the spatial zone (10).

14. A method in accordance with any one of the claims 10 to 13, wherein personal information on properties of the persons (14a-e) located in the spatial zone (10) are acquired in the access lock (18), in particular on weight, colour, contour or size of the person (14a-e); and wherein the personal information is available for the recognition of the presence and number of persons (14a-e) on the worker island (20a-c).

15. A method in accordance with any one of the claims 10 to 14, wherein the worker island (20a-c) is equipped for a better optoelectronic recognition of persons (14a-e), in particular by a bright, dark or yellow background or a contrast pattern or in that the worker island (20a-c) is kept free of objects, metal and/or reflective surfaces.

## Revendications

1. Dispositif de sécurité pour la sécurisation d'une zone (10) accessible uniquement via un sas d'accès (12) sécurisé et présentant une source de danger (16a-c), dans lequel le dispositif de sécurité comprend un moyen de contrôle d'accès (18) du sas d'accès (12), au moyen duquel des informations peuvent être obtenues concernant le nombre des personnes (14a-e) qui se trouvent dans la zone (10),
**caractérisé en ce que**
dans la zone (10) il est prévu un îlot (20a-c) pour les opérateurs, dans lequel la source de danger (16a-c) ne menace pas les personnes (14a-e), et **en ce que** le dispositif de sécurité comprend un moyen de surveillance d'îlot (22a-b), qui est réalisé pour déterminer la présence et le nombre de personnes (14a-e) sur l'îlot (20a-c), ainsi qu'une sortie de coupure de sécurité (30) via laquelle un signal de coupure peut être envoyé à la source de danger (16a-c) si la totalité des personnes (14a-e) qui se trouvent dans la zone (10) ne sont pas reconnues sur un îlot (20a-c) pour les opérateurs.

2. Dispositif de sécurité selon la revendication 1,
dans lequel le moyen de surveillance d'îlot (22a-b) comprend une première unité à capteur optoélectronique (24a-b).

3. Dispositif de sécurité selon la revendication 2,
dans lequel la première unité à capteur (24a-b) comprend une caméra, en particulier une caméra stéréoscopique (100), ou une caméra à temps de propagation de la lumière, ou au moins un scanneur à laser (200), en particulier un scanneur à laser tridimensionnel, ou encore un agencement de plusieurs scanneurs à laser bidimensionnels mesurant des distances.

4. Dispositif de sécurité selon la revendication 2 ou 3,
dans lequel le moyen de surveillance d'îlot (22a-b) comprend une seconde unité à capteur (26a-b), pour déterminer ainsi la présence et le nombre de personnes (14a-e) sur l'îlot (20a-c) avec la première unité à capteur (24a-b) et la seconde unité à capteur (26a-b) de manière diversitaire/redondante.

5. Dispositif de sécurité selon la revendication 4,
dans lequel la seconde unité à capteur (26a-b) comprend un lecteur d'étiquettes RFID, un tapis de passage, un circuit à actionner avec les deux mains, ou encore un capteur de poids.

6. Dispositif de sécurité selon l'une des revendications 2 à 5,
dans lequel la première unité à capteur (24a-b) et/ou la seconde unité à capteur (26a-b) est simultanément réalisée à titre de moyens de contrôle d'accès (18a-b).

7. Dispositif de sécurité selon l'une des revendications précédentes, dans lequel le moyen de surveillance d'îlot (22a-b) est réalisé pour reconnaître des personnes (14a-e) également en dehors de l'îlot (20a-c) et pour faire un suivi de leurs mouvements.

8. Dispositif de sécurité selon l'une des revendications précédentes, dans lequel le moyen de contrôle d'accès (18) est réalisé pour récupérer des informations personnelles concernant les particularités des personnes (14a-e) qui pénètrent dans la zone (10), en particulier le poids, la couleur, le contour ou la taille de la personne (14a-e), et les informations personnelles sont à disposition du moyen de surveillance d'îlot (22a-b) pour la reconnaissance de la présence et du nombre de personnes (14a-e) sur l'îlot (20a-c).

9. Dispositif de sécurité selon l'une des revendications précédentes, dans lequel l'îlot (20a-c) pour les opérateurs supporte la reconnaissance optoélectronique de personnes (14a-e) et présente en particulier un arrière-plan clair, sombre ou jaune ou encore un motif contrasté et est dépourvu d'objets ainsi que de surfaces métalliques et/ou réfléchissantes.

10. Procédé pour la sécurisation d'une zone (10) accessible uniquement via un sas d'accès sécurisé (12) et comprenant une source de danger (16a-c), dans lequel les personnes (14a-e) entrant dans la zone (10) et sortant de la zone (10) sont sûrement enregistrées dans le sas d'accès (12) et on détermine ainsi de façon sûre le nombre des personnes (14a-e) qui se trouvent dans la zone (10),
**caractérisé en ce que**
on constate la présence et le nombre de personnes (14a-e) dans un îlot (20a-c) pour les opérateurs à l'intérieur de la zone (10), dans lequel la source de danger (16a-c) ne peut pas menacer des personnes (14a-e), et **en ce qu'**en délivrant un signal de coupure de sécurité, la source de danger (16a-c) est sécurisée ou bien on empêche la mise en service de la source de danger (16a-c) si la totalité des personnes (14a-e) qui se trouvent dans la zone (10) n'est pas reconnue sur un îlot (20a-c).

11. Procédé selon la revendication 10,
dans lequel la présence et le nombre de personnes (14a-e) sur l'îlot (20a-c) sont déterminés au moyen d'une première unité à capteur optoélectronique (24a-b).

12. Procédé selon la revendication 11,
dans lequel la présence et le nombre de personnes (14a-e) sur l'îlot (20a-c) sont surveillés de manière diversitaire/redondante avec la première unité à capteur optoélectronique (24a-b) et avec une seconde unité à capteur (26a-b).

13. Procédé selon la revendication 11 ou 12,
dans lequel le sas d'accès (12) est également surveillé par la première unité à capteur (24a-b) et/ou par la seconde unité à capteur (26a-b), afin d'enregistrer les personnes (14a-e) qui pénètrent dans la zone (10) ou qui sortent de la zone (10).

14. Procédé selon l'une des revendications 10 à 13,
dans lequel des informations personnelles concernant des particularités des personnes (14a-e) qui se trouvent dans la zone (10) sont récupérés par le sas d'accès (18), en particulier concernant le poids, la couleur, le contour ou la taille de la personne (14a-e), et les informations personnelles sont à disposition pour la reconnaissance de la présence et du nombre de personnes (14a-e) sur l'îlot (20a-c).

15. Procédé selon l'une des revendications 10 à 14,
dans lequel l'îlot (20a-c) est équipé pour une reconnaissance optoélectronique améliorée de personnes (14a-e), en particulier par un arrière-plan clair, sombre ou jaune, ou par un motif contrasté, ou encore du fait que l'îlot (20a-c) est maintenu dépourvu d'objets, ou de surfaces métalliques et/ou réfléchissantes.
